# EUROPÄISCHE PATENTSCHRIFT

(11) **EP 4 018 155 B1**
(45) Veröffentlichungstag und Bekanntmachung des Hinweises auf die Patenterteilung: **09.09.2026**
(21) Anmeldenummer: 20751108.0
(22) Anmeldetag: 31.07.2020
(51) Int. Cl.: G01B 11/00, G01B 21/04

(54) **MESSSYSTEM**
MEASURING SYSTEM
SYSTÈME DE MESURE

(30) Priorität: 22.08.2019 DE 102019122650
(43) Veröffentlichungstag der Anmeldung: 29.06.2022
(73) Patentinhaber: Hexagon Metrology GmbH, 35578 Wetzlar (DE)
(72) Erfinder: WIEST, Christoph, 88250 Weingarten (DE)
(74) Vertreter: RavensPAT Patentanwälte Partnerschaft mbB
(86) Internationale Anmeldenummer: PCT/EP2020/071665
(87) Internationale Veröffentlichungsnummer: WO 2021/032443

(56) Entgegenhaltungen:
- DE-A1- 10 018 056
- DE-A1- 102005 011 285
- DE-A1- 102015 205 738
- DE-A1- 102016 212 650
- DE-T2- 602005 005 839

## Beschreibung

### Stand der Technik

Messsysteme zur scannenden Erfassung von Messwerten sind bekannt.

Ein bekanntes Messsystem umfasst ein optisches Messinstrument, welches an eine Maschinenachse einer Werkzeug oder Messmaschine anordenbar ausgebildet ist. Mittels des optischen Messinstruments sind beispielsweise mehrere Messwerte in einer zeitlichen Reihenfolge hintereinander erfassbar. Wird das Messinstrument während einer Messung über ein zu messendes Objekt bewegt, können während der Bewegung des Messinstruments damit unterschiedliche Stellen des zu messenden Objekts mit dem Messinstrument vermessen werden. Hierdurch ist beispielsweise ein Höhenprofil des zu messenden Objekts erzeugbar.

Vergleichsweise aufwändig ist es bei diesem bekannten Messsystem die erzeugten Messwerte mit den gemessenen Stellen des Objekts, den Messkoordinaten, in Übereinstimmung zu bringen. Bei bekannten Messsystemen korreliert die Bewegungsgeschwindigkeit des Messinstruments während der Messung mit einer Bestimmungsgenauigkeit der Messstelle. Je genauer die Messstelle bestimmt werden soll, desto langsamer verläuft die Messung oder umgekehrt, je schneller gemessen wird, desto ungenauer ist die Bestimmung der Messstelle.

DE 10 2016 212650 A1 offenbart eine scannende Erfassung von Messwerten, bei der fehlende Positionskoordinaten nachträglich durch eine Interpolation in Abhängigkeit von realen Positionsdatensätzen, die zeitlich vor und nach der Lücke erzeugt wurden, berechnet werden.

### Aufgabe und Vorteile der Erfindung

Der Erfindung liegt die Aufgabe zugrunde, ein alternatives Messsystem zur scannenden Erfassung von Messwerten bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Messsystem zur scannenden Erfassung von Messwerten aus, wobei das Messsystem ein Messinstrument umfasst, wobei das Messsystem, insbesondere das Messinstrument des Messsystems, an eine Bewegungsachse einer Maschine anordenbar ausgebildet ist, wobei die Maschine als Werkzeugmaschine oder als Messmaschine ausgebildet ist, wobei mit dem Messinstrument ein Messobjekt vermessen werden kann, wobei das Messinstrument beim Vermessen des Messobjekts einen Messwert erzeugt, wobei das Messsystem eine Kontrolleinheit umfasst, wobei die Kontrolleinheit den Messwert verarbeiten und speichern kann, wobei das Messsystem eine Speichereinheit aufweist, um den erfassten Messwert zu speichern.

Die Speichereinheit ist vorteilhafterweise als eine herkömmliche magnetische oder elektronische Speichereinheit vorhanden. Beispielsweise ist die Speichereinheit als ein elektronischer Datenspeicher ausgebildet. Z.B. ist die Speichereinheit als eine DRAM-Speichereinheit, als eine ROM-Speichereinheit oder als eine Flash-EEPROM-Speichereinheit vorhanden. Die Kontrolleinheit umfasst vorteilhafterweise ein Steuerungsmodul in Form einer Recheneinheit, z.B. einem Mikrocontroller bzw. einem Mikroprozessor.

Vorteilhafterweise ist die Maschine als eine Werkzeugmaschine oder als eine Messmaschine ausgebildet. Die Maschine ist beispielsweise als ein CNC-Bearbeitungszentrum vorhanden. Zum Beispiel ist die Werkzeugmaschine als ein Dreh- und/oder Fräszentrum ausgebildet. Vorteilhafterweise umfasst die Werkzeugmaschine mehrere zueinander bewegbare Maschinenachsen. Beispielsweise ist die Werkzeugmaschine als ein 3-Achs- oder als eine 5-Achs-Werkzeugmaschine ausgebildet. Beispielsweise ist die Messmaschine als eine Koordinatenmessmaschine ausgebildet.

Der Kern der Erfindung ist nun darin zu sehen, dass das Messsystem dazu ausgebildet ist, einen ersten Messwert mit einer ersten Positionskoordinate des an der Maschine angeordneten Messinstruments in Korrelation zu bringen, wobei das Messsystem dazu ausgebildet ist, ausgehend von der Korrelation des ersten Messwerts mit der ersten Positionskoordinate weiteren vom Messinstrument erfassten Messwerten Positionskoordinaten einzig dadurch zuzuweisen, dass dem Messsystem eine Bewegungsgeschwindigkeit und eine Bewegungsrichtung des Messinstruments während oder bei der Erfassung der Messwerte bekannt, wobei der erste Messwert der zeitlich gesehen letzte erzeugte Messwert der Messung ist.

Hierdurch ist eine vergleichsweise präzise Vermessung eines Messobjekts bei einer vergleichsweise kurzen Messzeit mit dem Messsystem realisierbar.

Vorteilhafterweise ist die Bewegungsrichtung und/oder die Bewegungsgeschwindigkeit des Messinstruments während der Erfassung der Messwerte konstant. Beispielsweise wird das Messinstrument während der Erfassung der Messwerte mit einer konstanten Geschwindigkeit und/oder in eine konstante Richtung durch eine Bewegungsachse oder mehrere Bewegungsachsen der Maschine bewegt.

Bevorzugterweise ist die Bewegungsrichtung und/oder die Bewegungsgeschwindigkeit des Messinstruments im Bezug zum zu messenden Messobjekt zu sehen. Entsprechend ist es denkbar, dass das Messinstrument während einer Messung, relativ zu einer Umgebung, z.B. zu einer Umgebung einer Maschine, an welcher das Messinstrument angeordnet ist, positionsfest vorhanden ist und stattdessen das Messobjekt relativ zum Messinstrument und relativ zur Umgebung bewegt wird.

Bevorzugterweise ist jede Positionskoordinate, welche das Messsystem einem Messwert zuweist, eine Positionskoordinate des an der Maschine angeordneten Messinstruments. Vorteilhafterweise ist die Positionskoordinate des an der Maschine angeordneten Messinstruments auf eine Ortskoordinate des Messobjekts transformierbar, z.B. durch Normierung. Vorteilhafterweise ist die Ortskoordinate des Messobjekts eine Messstelle, an welcher das Messinstrument das Messobjekt vermessen und dadurch den Messwert erzeugt hat.

Weiter wird vorgeschlagen, dass, ausgehend von der Korrelation des ersten Messwerts mit der ersten Positionskoordinate, das Messsystem dazu ausgebildet ist, weiteren vom Messinstrument erfassten Messwerten weitere Positionskoordinaten dadurch zuzuweisen, dass dem Messsystem ein räumlicher Bezug der erfassten Messwerte zueinander bekannt ist. Hierdurch ist ausgehend von der Positionskoordinate des ersten Messwerts einem weiteren Messwert, insbesondere allen weiteren Messwerten vergleichsweise einfach eine entsprechende Positionskoordinate zuordenbar.

Auch erweist es sich von Vorteil, dass, ausgehend von der Korrelation des ersten Messwerts mit der ersten Positionskoordinate, das Messsystem dazu ausgebildet ist, weiteren vom Messinstrument erfassten Messwerten weitere Positionskoordinaten dadurch zuzuweisen, dass dem Messsystem ein zeitlicher Bezug der erfassten Messwerte zueinander bekannt ist. Vorteilhafterweise ist dem Messsystem eine Bewegungsgeschwindigkeit und Bewegungsrichtung des Messinstruments zwischen der Erfassung zweier verschiedener Messwerte einer Messung bekannt.

Bevorzugterweise ist dem Messsystem ein räumlicher und/oder zeitlicher Abstand der erfassten Messwerte zueinander bekannt. Unter einem räumlichen Bezug ist vorteilhafterweise nicht nur eine räumliche Distanz oder ein räumlicher Abstand, sondern auch eine insbesondere dazugehörige räumliche Richtung zu verstehen. Beispielsweise ordnet das Messsystem aufgrund des zeitlichen Bezugs, z.B. eines zeitlichen Abstands, und der bekannten Bewegungsgeschwindigkeit und Bewegungsrichtung des Messinstruments weiteren vom Messinstrument erfassten Messwerten weitere Positionskoordinaten zu. Insbesondere ist dem Messsystem ein räumlicher und/oder zeitlicher Abstand der erfassten Messwerte einer Messung bekannt. Vorteilhafterweise erzeugt das Messsystem Messwerte, welche in einem bekannten zeitlichen Bezug zueinander stehen. Beispielsweise erzeugt das Messsystem, zum Beispiel das Messinstrument Messwerte in einem insbesondere konstanten räumlichen und/oder zeitlichen Intervall.

Vorteilhafterweise ist dem Messsystem ein räumlicher Bezug und/oder ein zeitlicher Bezug zwischen dem ersten Messwert und einem weiteren Messwert bekannt. Insbesondere ist dem Messsystem ein räumlicher Bezug und/oder ein zeitlicher Bezug zwischen dem ersten Messwert und allen weiteren Messwerten bekannt. Beispielsweise ist dem Messsystem eine Bewegungsgeschwindigkeit und eine Bewegungsrichtung der Bewegungsachse der Maschine bekannt, insbesondere aller Bewegungsachsen der Maschine.

Vorteilhafterweise ist das Messsystem auf eine Bewegungsgeschwindigkeit einer Bewegungsachse der Maschine kalibriert und/oder normiert. Insbesondere ist das Messsystem auf mehrere Bewegungsgeschwindigkeiten einer Bewegungsachse der Maschine kalibriert und/oder normiert. Hierdurch ist dem Messsystem ein räumlicher Abstand der Messwerte bekannt. Insbesondere ist dem Messsystem ein räumlicher Abstand der Messwerte abhängig von einer Zykluszeit der Messwerterfassung oder Messwerterzeugung des Messinstruments und z.B. abhängig von der Bewegung der Bewegungsachse bekannt.

Von Vorteil ist ebenfalls, dass das Messinstrument als ein berührungslos arbeitendes Messinstrument ausgebildet ist.

Das Messinstrument ist beispielsweise als ein Messsensor vorhanden. Das Messinstrument ist beispielsweise als ein konfokal-chromatischer Abstandssensor, als ein Laserscanner, und/oder als ein bildgebendes Messinstrument, z.B. als ein CCD-Sensor, ausgebildet. Beispielsweise ist das Messinstrument als ein Linienscanner vorhanden. Vorteilhafterweise ist das Messinstrument als ein scannendes Messinstrument, z.B. als ein Scanner vorhanden. Beispielsweise erzeugt das Messinstrument während einer Messung punktweise, linienweise oder zeilenweise Messwerte.

Vorstellbar ist aber auch, dass das Messinstrument als ein berührender, insbesondere taktil arbeitender Messsensor ausgebildet ist. Beispielsweise ist das Messinstrument dazu ausgebildet, eine Auslenkgröße eines Tastelements des taktil arbeitenden Messsensors und/oder einer Kraft des Tastelements des taktil arbeitenden Messsensors zu ermitteln.

Außerdem ist es von Vorteil, dass das Messsystem eine Schnittstelle zum Verbinden des Messsystems mit einer Steuereinheit der Maschine aufweist, wobei die Kontrolleinheit ein Steuerungsmodul aufweist, welches über die Schnittstelle Positionskoordinaten, insbesondere Positionskoordinaten des Messinstruments, von der Maschine ausliest, wobei das Steuerungsmodul die ausgelesene Positionskoordinate mit einem vorgegebenen Koordinaten-Zielbereich abgleicht und wobei das Steuerungsmodul ein Triggersignal auslöst, wenn das Steuerungsmodul feststellt, dass die Positionskoordinate im Koordinaten-Zielbereich liegt. Hierdurch ist eine Messdauer oder Messlänge durch das Messsystem vorgebbar oder kontrollierbar.

Die Steuereinheit der Maschine ist beispielsweise als eine numerische Steuerung, z.B. als eine CNC (computerized numerical control) ausgebildet.

Vorteilhafterweise ist das Messsystem mittels der Schnittstelle derart mit der Maschine verbindbar, das insbesondere aktuelle Positionskoordinaten des Messinstruments durch das Messsystem auslesbar sind. Beispielsweise umfasst das Messsystem einen Zeitgeber. Beispielsweise sind ein Zeitgeber des Messsystems und ein Zeitgeber der Maschine miteinander synchronisierbar. Zum Beispiel ist dem Messinstrument eine zeitliche Verzögerung, beispielsweise ein Delay, zwischen einem Abfragezeitpunkt einer Positionskoordinate und einem Empfangszeitpunkt der Positionskoordinate bekannt. Vorteilhafterweise umfasst das Messinstrument einen Zeitgeber.

Die Schnittstelle ist vorteilhafterweise als eine serielle Schnittstelle ausgebildet. Vorteilhafterweise basiert die Kommunikation zwischen Messsystem und der Maschine auf einem synchronen, seriellen Protokoll. Denkbar ist auch, dass die Schnittstelle als eine Standard-Schnittstelle, z.B. als ein Standard Datenbus, ausgebildet ist. Beispielsweise ist die Schnittstelle als ein Feldbus, z.B. als eine Profinet-Schnittstelle, als eine EnDat-Schnittstelle oder als eine Ethernet-Schnittstelle vorhanden. Beispielsweise ist die Schnittstelle als ein SPI (Serial Peripheral Interface) ausgebildet. Außerdem ist es von Vorteil, dass die Schnittstelle einen Übertragungskanal zur seriellen Datenkommunikation mit der Maschine besitzt. Der Übertragungskanal ist beispielsweise als eine Signalleitung vorhanden. Die Schnittstelle ist beispielsweise als eine serielle und/oder parallele Schnittstelle ausgebildet. Vorteilhafterweise ist die Schnittstelle in der Form einer USB-Schnittstelle oder in der Form einer Firewire-Schnittstelle vorhanden.

Von Vorteil erweist sich auch, dass die Schnittstelle eine drahtgebundene Schnittstelle ist. Hierdurch ist ein vergleichsweise sicherer Übertragungsweg realisiert. Ebenfalls erweist es sich von Vorteil, dass die Schnittstelle einen Übertragungskanal für eine Stromversorgung der Steuerungseinheit und einen Übertragungskanal für eine Messsignalübertragung aufweist.

Bevorzugterweise ist das Steuerungsmodul dazu ausgebildet, die ausgelesene Positionskoordinate mit einem vorgegebenen Koordinaten-Zielbereich abzugleichen. Beispielsweise ist das Steuerungsmodul dazu ausgebildet, ein Triggersignal auszulösen, wenn das Steuerungsmodul feststellt, dass die Positionskoordinate, insbesondere die aktuell ausgelesene Positionskoordinate, im Koordinaten-Zielbereich liegt.

Weiter wird vorgeschlagen, dass das Messsystem eine Schnittstelle zum Verbinden des Messsystems mit einer Steuereinheit der Maschine aufweist, wobei das Messsystem einen Zeitgeber umfasst, wobei die Kontrolleinheit ein Steuerungsmodul aufweist, wobei das Steuerungsmodul eine Zeit des Zeitgebers mit einem vorgegebenen Zeitpunkt abgleicht und wobei das Messsystem das Triggersignal auslöst, wenn die Zeit des Zeitgebers den vorgegebenen Zeitpunkt erreicht oder überschritten hat. Hierdurch ist einem Messwert des Messinstruments eine Positionskoordinate der Maschine, insbesondere eine Messkoordinate des Messobjekts zuordenbar. Auch ist hierdurch ein Steuerungsbefehl an die Maschine auslösbar.

Beispielsweise ist dem Messsystem ein Startzeitpunkt einer Messung und eine Messdauer der Messung bekannt und/oder vorgebbar. Beispielsweise ist das Messsystem dazu ausgebildet, ausgehend vom Startzeitpunkt und der Messdauer den vorgegebenen Zeitpunkt zu ermitteln. Denkbar ist auch, dass dem Messsystem ein Startzeitpunkt einer Messung, eine Bewegungsgeschwindigkeit der Bewegungsachse der Maschine und eine Messstrecke bekannt ist. Beispielsweise ist das Messsystem dazu ausgebildet, ausgehend vom Startzeitpunkt, der Bewegungsgeschwindigkeit der Bewegungsachse und der Messtrecke den vorgegebenen Zeitpunkt zu ermitteln. Vorstellbar ist auch, dass das Messsystem dazu ausgebildet ist, sodass dem Messsystem der vorgegebene Zeitpunkt vorgebbar ist.

Überdies ist es vorteilhaft, dass die Kontrolleinheit das Triggersignal zusammen mit einem zum Zeitpunkt des Triggersignals erfassten Messwert in der Speichereinheit ablegt, wobei dem Messsystem ein zeitlicher Bezug von Triggersignal und dem Messwert bekannt ist. Hierdurch ist eine Zuordnung des Messwerts zu einer zugehörigen Messstelle, z.B. einer Positionskoordinate ermöglicht.

Vorteilhafterweise ist dem Messsystem ein Delay oder eine Verzögerungszeit zwischen Triggersignal und Erhalt des Messwerts vom Messinstrument bekannt. Insbesondere ist dieser Delay oder diese Verzögerung konstant.

Bevorzugterweise umfasst das Messsystem neben dem Messinstrument eine Sende- und Empfangseinheit, wobei die Sende- und Empfangseinheit dazu ausgebildet ist, vom Messinstrument erzeugte Messwerte zu empfangen und zu verarbeiten. Denkbar ist, dass die Sende- und Empfangseinheit die Schnittstelle aufweist. Vorstellbar ist auch, dass die Kontrolleinheit Bestandteil der Sende- und Empfangseinheit ist. Beispielsweise ist die Sende- und Empfangseinheit mit dem Messinstrument über eine Funkverbindung und/oder über eine optische Verbindung gekoppelt.

Beispielsweise ist die Sende- und Empfangseinheit als eine Steuer- und Auswerteeinheit für das Messinstrument ausgebildet. Vorteilhafterweise steuert die Steuer- und Auswerteeinheit das Messinstrument. Beispielsweise ist die Steuer- und Auswerteeinheit dazu ausgebildet, Messdaten des Messinstruments auszuwerten, insbesondere aus den Messdaten des Messinstruments einen Messwert zu ermitteln.

Beispielsweise kommunizieren die Kontrolleinheit und/oder die Sende- und Empfangseinheit mit dem Messinstrument über einen drahtlosen Kommunikationskanal. Beispielsweise kommunizieren die Kontrolleinheit und/oder die Sende- und Empfangseinheit mit dem Messinstrument mittels optischer Signale und/oder mittels Funksignalen. Die optischen Signale sind beispielsweise Infrarotsignale. Die Funksignale sind beispielsweise Bluetooth-Signale.

Weiter wird vorgeschlagen, dass die Sende- und Empfangseinheit und das Messinstrument mittels einer Funkverbindung miteinander kommunizieren. Bevorzugterweise kommunizieren die Kontrolleinheit und/oder die Sende- und Empfangseinheit und das Messinstrument mittels einer WLAN-Schnittstelle, einer Bluetooth-Schnittstelle und/oder einer Mobilfunkschnittstelle. Die Mobilfunkschnittstelle ist beispielsweise als eine LTE-Schnittstelle vorhanden.

Denkbar ist auch, dass die Kontrolleinheit als eine vom Messinstrument und/oder der Sende- und Empfangseinheit separate Recheneinheit ausgebildet ist, z.B. als ein Computer. Bevorzugterweise ist die Kontrolleinheit als separate Recheneinheit sowohl mit der Maschine verbindbar, als auch mit der Sende- und Empfangseinheit und/oder dem Messinstrument. Erfindungsgemäß umfasst das Messinstrument eine Schnittstelle, mittels welcher das Messinstrument mit der Steuereinheit der Maschine verbindbar ist.

Von Vorteil erweist sich auch, dass der zum Zeitpunkt des Triggersignals erfasste Messwert der erste Messwert ist. Beispielsweise beendet das Messinstrument nach Auslösen des Triggersignals die Messwerterfassung. Erfindungsgemäß ist der erste Messwert der zeitlich gesehen letzte erzeugte Messwert der Messung. Beispielsweise ist der erste Messwert der zeitlich gesehen letzte von der Kontrolleinheit verarbeitete Messwert der Messung.

In einer vorteilhaften Ausbildung der Erfindung ist das Messsystem, insbesondere die Kontrolleinheit des Messsystems, dazu ausgebildet, das Triggersignal über eine insbesondere weitere Schnittstelle an die Steuereinheit der Maschine zu übermitteln. Hierdurch ist die Bewegung der Bewegungsachse der Maschine anhaltbar.

Bevorzugterweise umfasst das Messsystem zwei Schnittstellen, wobei über eine erste Schnittstelle das Messsystem das Triggersignal an die Steuereinheit der Maschine übermittelt und über eine zweite Schnittstelle das Messsystem Positionskoordinaten von der Maschine ausliest. Vorteilhafterweise sind die beiden Schnittstellen physisch getrennt voneinander vorhanden. Beispielsweise sind die beiden Schnittstellen voneinander verschieden ausgebildet. Beispielsweise umfasst die Kontrolleinheit die zweite Schnittstelle. Denkbar ist auch, dass die Sende- und Empfangseinheit oder das Messinstrument die erste Schnittstelle aufweist. Beispielsweise ist die erste Schnittstelle als eine proprietäre Schnittstelle ausgebildet. Die erste Schnittstelle ist beispielsweise ausgebildet, eine serielle Datenübertragung zu ermöglichen.

Ist die Kontrolleinheit als eine separate Recheneinheit ausgebildet umfasst das Messsystem vorteilhafterweise eine weitere, dritte Schnittstelle, mittels welcher das Messinstrument mit der Kontrolleinheit verbunden ist. Beispielsweise übermittelt das Messinstrument über die dritte Schnittstelle die Messwerte an die Kontrolleinheit. Denkbar ist, dass die Sende- und Empfangseinheit die dritte Schnittstelle aufweist. Beispielweise ist die Sende- und Empfangseinheit mittels der dritten Schnittstelle physisch mit der Kontrolleinheit verbunden.

Beispielsweise kommunizieren die Steuereinheit der Maschine und das Messsystem, insbesondere das Messinstrument über einen drahtlosen Kommunikationskanal. Beispielsweise kommunizieren die Steuereinheit der Maschine und das Messsystem mittels optischer Signale und/oder mittels Funksignalen. Die optischen Signale sind beispielsweise Infrarotsignale. Die Funksignale sind beispielsweise Bluetooth-Signale. Weiter wird vorgeschlagen, dass die Steuereinheit der Maschine und das Messsystem, insbesondere das Messinstrument mittels einer Funkverbindung miteinander kommunizieren. Bevorzugterweise kommunizieren die Steuereinheit der Maschine und das Messsystem mittels einer WLAN-Schnittstelle, einer Bluetooth-Schnittstelle und/oder einer Mobilfunkschnittstelle. Die Mobilfunkschnittstelle ist beispielsweise als eine LTE-Schnittstelle vorhanden.

Von Vorteil ist auch, dass das Messsystem dazu ausgebildet ist, eine zum Zeitpunkt des Triggersignals erfasste erste Positionskoordinate, insbesondere eine Positionskoordinate des an der Maschine angeordneten Messinstruments, von der Maschine auszulesen, wobei dem Messsystem ein zeitlicher Bezug von Triggersignal und der ersten Positionskoordinate bekannt ist, wobei die Kontrolleinheit des Messsystems dazu ausgebildet ist, einen zeitlichen Bezug zwischen der ersten Positionskoordinate und dem ersten Messwert herzustellen. Hierdurch ist die Erstellung eines Höhenprofils des vermessenen Messobjekts realisierbar.

Beispielsweise ist dem Messsystem ein Delay, beispielsweise ein zeitlicher Verzug zwischen Ausgabe des Triggersignals durch die Kontrolleinheit des Messsystems an die Maschine und Korrelation des Triggersignals mit einer Positionskoordinate durch die Maschine bekannt. Vorteilhafterweise ist die Maschine dazu ausgebildet, das Triggersignal mit einer Positionskoordinate zu korrelieren oder das Triggersignal mit einer Positionskoordinate zu verknüpfen. Vorteilhafterweise ist dieser zeitliche Verzug insbesondere annähernd konstant.

Eine vorteilhafte Variante der Erfindung ist eine Maschine, insbesondere Werkzeugmaschine und/oder Messmaschine, mit einem Messsystem nach einer der vorangegangen genannten Ausführungen, wobei die Maschine dazu ausgebildet ist, aufgrund eines Triggersignals des Messsystems eine Achsbewegung zu stoppen. Hierdurch ist ein Messablauf durch das Messsystem steuerbar.

Vorteilhafterweise ist die Maschine dazu ausgebildet, aufgrund des vom Messsystem ausgelösten Triggersignals eine Achsbewegung zu stoppen.

Eine weitere vorteilhafte Ausgestaltung der Erfindung ist eine Maschine, insbesondere Werkzeugmaschine und/oder Messmaschine, wir vorangegangen genannt, wobei die Steuereinheit der Maschine eine Achsposition zum Zeitpunkt des Empfangs eines Triggersignals des Messsystems in einem Speichermodul der Maschine auslesbar abspeichert.

Vorteilhafterweise speichert die Steuereinheit der Werkzeugmaschine und/oder die Steuereinheit der Messmaschine eine Achsposition zum Zeitpunkt des Empfangs des Triggersignals zusammen mit dem Triggersignal im Speichermodul der Werkzeugmaschine und/oder im Speichermodul der Messmaschine. Beispielswiese ist die Achsposition zum Zeitpunkt des Empfangs des Triggersignals für das Messsystem erkennbar im Speichermodul der Werkzeugmaschine und/oder im Speichermodul der Messmaschine auslesbar ablegbar.

Vorstellbar ist auch, dass die Kontrolleinheit an der Maschine vorhanden ist. Denkbar ist auch, dass die Kontrolleinheit ein Bestandteil der Maschine ist. Beispielsweise ist die Kontrolleinheit eine Komponente der Steuereinheit. Zum Beispiel umfasst die Steuereinheit die Kontrolleinheit.

### Beschreibung von Ausführungsbeispielen

Mehrere Ausführungsbeispiele werden anhand der nachstehenden schematischen Zeichnungen unter Angabe von weiteren Einzelheiten und Vorteilen näher erläutert:
Es zeigen:
- Figur 1: eine schematische Darstellung einer Maschine mit einem Messsystem nach einer ersten Ausführungsvariante,
- Figur 2: eine schematische Darstellung einer Maschine mit einem Messsystem nach einer zweiten Ausführungsvariante,
- Figur 3: eine schematische Darstellung einer Maschine mit einem Messsystem nach einer dritten Ausführungsvariante.

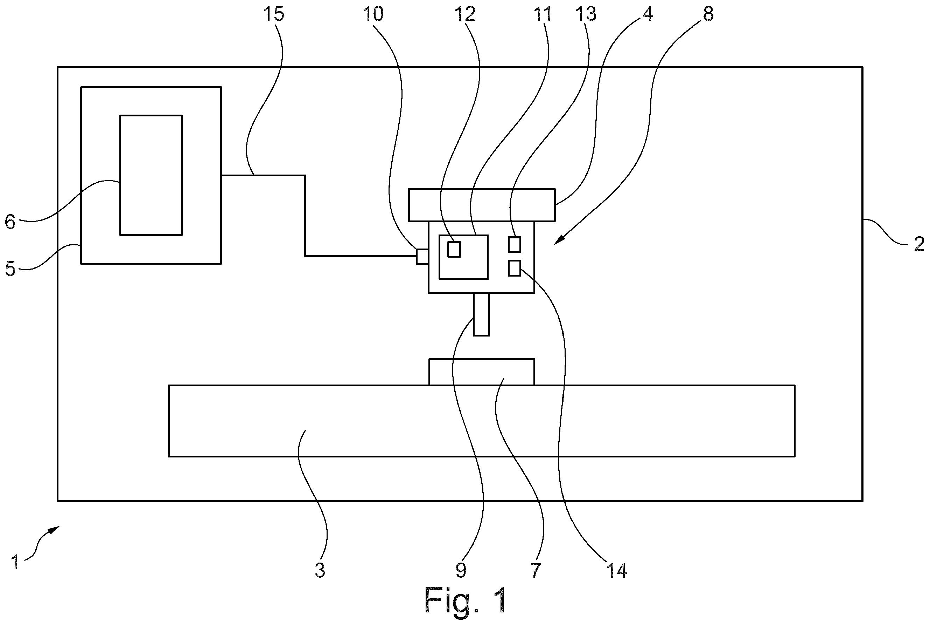

Figur 1 zeigt eine schematisch dargestellte Maschine 1 mit einer Umhausung 2, einem Maschinentisch 3, einer Bewegungsachse 4 und einer Steuereinheit 5. Die Maschine 1 umfasst beispielsweise ein Speichermodul 6, welches z.B. an der Steuereinheit 5 vorhanden ist. Auf dem Maschinentisch 3 ist beispielhaft ein Messobjekt 7 angeordnet.

An der Maschine 1 ist vorteilhafterweise ein Messsystem 8 angeordnet vorhanden. Das Messsystem 8 umfasst ein Messinstrument 9, eine Schnittstelle 10 und eine Kontrolleinheit 11. Die Kontrolleinheit 11 weist beispielsweise ein Steuerungsmodul 12 auf. Das Messsystem 8 kann des Weiteren eine Speichereinheit 13 und einen Zeitgeber 14 umfassen.

In der Ausführungsvariante gemäß Figur 1 bilden die weiteren Komponenten des Messsystems 8, wie z.B. die Kontrolleinheit 11, neben dem Messinstrument 9 eine separate kompakte Einheit. Gemäß Figur 1 sind die weiteren Komponenten des Messsystems 8 als eine kompakte Baueinheit, bspw. in einem einzigen Gehäuse an der Bewegungsachse 4 der Maschine 1 anordenbar ausgebildet.

Beispielsweise ist das Messsystem 8 mittels eines Übertragungskanals 15 über die Schnittstelle 10 mit der Steuereinheit 5 der Maschine 1 verbunden.

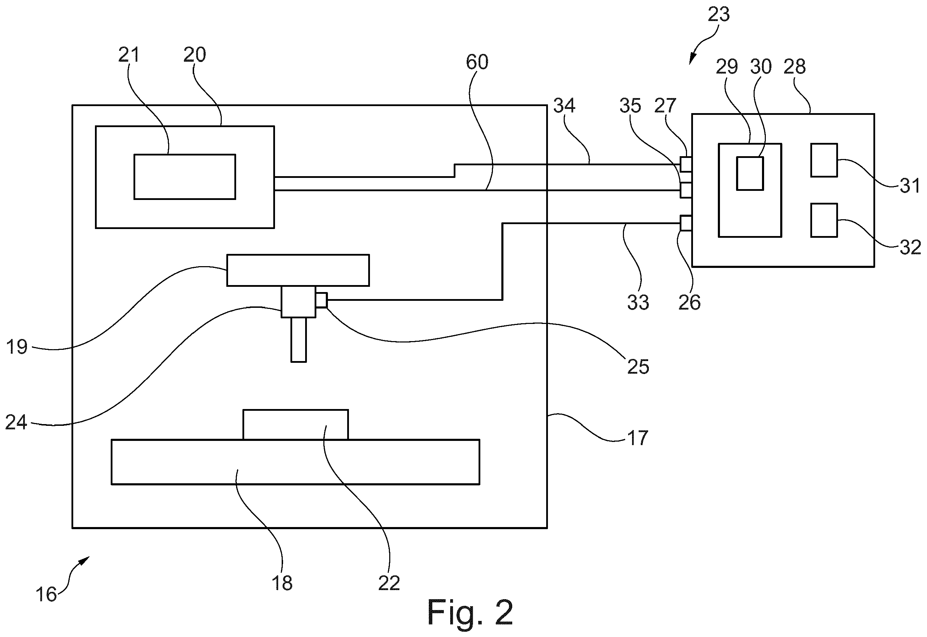

Figur 2 zeigt in einer weiteren Ausführungsvariante eine Maschine 16 mit einer schematisch dargestellten Umhausung 17, einem Maschinentisch 18, einer Bewegungsachse 19 und einer Steuereinheit 20. Die Maschine 16 umfasst beispielsweise ein Speichermodul 21, welches z.B. an der Steuereinheit 20 vorhanden ist. Auf dem Maschinentisch 18 ist beispielhaft ein Messobjekt 22 angeordnet.

An der Maschine 16 ist vorteilhafterweise ein Messsystem 23 angeordnet. Das Messsystem 23 umfasst ein Messinstrument 24, eine erste Schnittstelle 25, eine zweite Schnittstelle 26 und beispielsweise eine dritte Schnittstelle 27. Weiter umfasst das Messsystem 23 beispielsweise eine Sende- und Empfangseinheit 28. Die Sende- und Empfangseinheit 28 weist beispielsweise eine Kontrolleinheit 29 mit einem Steuerungsmodul 30 auf. Das Messsystem 23 kann des Weiteren eine Speichereinheit 31 und einen Zeitgeber 32 umfassen.

In der Ausführungsvariante gemäß Figur 2 ist das Messinstrument 24 beispielhaft über die Schnittstellen 25, 26 mittels einem Übertragungskanal 33 mit der Sende- und Empfangseinheit 28 gekoppelt. Der Übertragungskanal 33 ist beispielsweise als ein kabelloser Übertragungskanal vorhanden. Der Übertragungskanal 33 ist beispielsweise als eine Funkverbindung oder ein Funkkanal ausgebildet. Denkbar ist auch, dass der Übertragungskanal 33, insbesondere in der Form einer Signalleitung, als eine optische Verbindung, z.B. als ein optischer Leitungskanal ausgebildet ist. Außerdem ist die Sende- und Empfangseinheit 28 mittels der Schnittstelle 28 mit der Maschine 16, insbesondere der Steuereinheit 20 der Maschine 16 über einen weiteren Übertragungskanal 34 verbunden.

Gemäß der Ausführungsvariante nach Figur 2 ist es weiter vorstellbar, dass eine weitere Schnittstelle 35 an der Sende- und Empfangseinheit 28 vorhanden ist, wobei die Sende- und Empfangseinheit 28 mittels der Schnittstelle 35 über einen weiteren Übertragungskanal 60 mit der Maschine 16 verbunden sein kann.

Denkbar ist weiter, dass eine der beiden Schnittstellen 27, 35 als eine Standardschnittstelle ausgebildet ist, z.B. als eine USB- oder Netzwerkschnittstelle. Beispielsweise ist diese Schnittstelle dazu ausgebildet, Positionskoordinaten von der Maschine 16 durch die Kontrolleinheit 29 abzufragen. Weiter ist es vorstellbar, dass die andere der beiden Schnittstellen 27, 35 als eine proprietäre Schnittstelle ausgebildet ist. Ist die andere Schnittstelle 27, 35 als eine proprietäre Schnittstelle ausgebildet. So ist es vorteilhaft, dass die Kontrolleinheit 29 mittels der proprietären Schnittstelle mit der Maschine 16 mittels einer seriellen Datenübertragung kommunizieren kann.

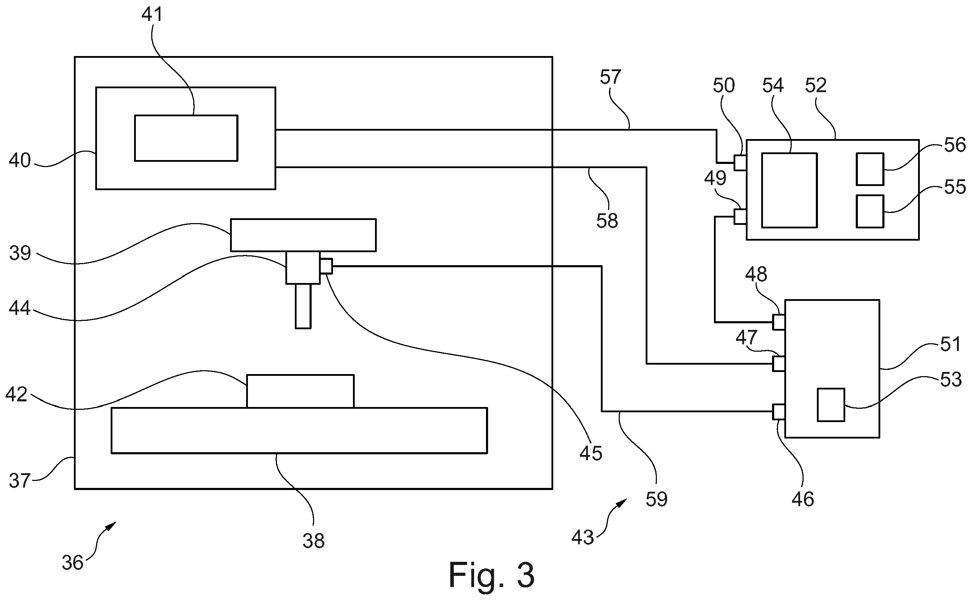

Figur 3 zeigt in einer weiteren Ausführungsvariante eine Maschine 36 mit einer schematisch dargestellten Umhausung 37, einem Maschinentisch 38, einer Bewegungsachse 39 und einer Steuereinheit 40. Die Maschine 36 umfasst beispielsweise ein Speichermodul 41, welches z.B. an der Steuereinheit 40 vorhanden ist. Auf dem Maschinentisch 38 ist beispielhaft ein Messobjekt 42 angeordnet.

An der Maschine 36 ist vorteilhafterweise ein Messsystem 43 angeordnet. Das Messsystem 43 umfasst ein Messinstrument 44 und Schnittstellen 45 bis 50. Weiter umfasst das Messsystem 43 beispielsweise Sende- und Empfangseinheit 51 und eine Kontrolleinheit 52. Die Sende- und Empfangseinheit 51 und die Kontrolleinheit 52 sind vorteilhafterweise beabstandet zueinander vorhanden und mittels der Schnittstellen 48, 49 z.B. über eine USB-Verbindung oder eine Ethernet-Verbindung bzw. Netzwerkverbindung miteinander gekoppelt. Die Kontrolleinheit 52 ist beispielsweise als ein Computer, z.B. als ein Laptop vorhanden.

Beispielsweise umfasst die Sende- und Empfangseinheit 51 einen Zeitgeber 53. Denkbar ist auch, dass die Kontrolleinheit 52 einen Zeitgeber aufweist (nicht gezeigt).

Die Kontrolleinheit 52 weist ein Steuerungsmodul 54 und beispielsweise eine Speichereinheit 55 auf. Vorstellbar ist ebenfalls, dass die Sende- und Empfangseinheit 51 eine Speichereinheit umfasst (nicht gezeigt).

Vorstellbar ist weiter, dass die Schnittstelle 50 als eine Standardschnittstelle ausgebildet ist, z.B. als eine USB- oder Netzwerkschnittstelle mit einem entsprechenden Übertragungskanal 57. Beispielsweise ist diese Schnittstelle 50 dazu ausgebildet, Positionskoordinaten von der Maschine 36 durch die Kontrolleinheit 52 abzufragen und auszulesen. Vorstellbar ist weiter, dass die Kontrolleinheit 52 einen Zeitgeber 56 umfasst, wobei die Kontrolleinheit 52, insbesondere das Steuerungsmodul 54 überwacht und prüft, ob eine Zeit des Zeitgebers 56 einen vorgegebenen Zeitpunkt erreicht oder überschritten hat und/oder ob eine ausgelesene Positionskoordinate in einem vorgegebenen Koordinaten-Zielbereich liegt.

Die Schnittstelle 47 der Sende- und Empfangseinheit 51 ist vorteilhafterweise als eine proprietäre Schnittstelle ausgebildet, um ein Triggersignal mittels einem weiteren Übertragungskanal 58 an die Steuereinheit 40 der Maschine 36 zu übermitteln. Das Triggersignal ist beispielsweise mittels einer seriellen Datenübertragung an die Maschine 36 übermittelbar.

In der Ausführungsvariante gemäß Figur 3 ist das Messinstrument 44 beispielhaft mittels der Schnittstellen 45, 46 über einen Übertragungskanal 59 mit der Sende- und Empfangseinheit 51 gekoppelt. Der Übertragungskanal 59 ist beispielsweise als ein kabelloser Übertragungskanal vorhanden. Der Übertragungskanal 59 ist beispielsweise als eine Funkverbindung oder ein Funkkanal ausgebildet. Denkbar ist auch, dass der Übertragungskanal 59 als eine optische Verbindung, z.B. als ein optischer Leitungskanal ausgebildet ist.

**Bezugszeichenliste**

| | | | |
|---|---|---|---|
| 1 | Maschine | 31 | Speichereinheit |
| 2 | Umhausung | 32 | Zeitgeber |
| 3 | Maschinentisch | 33 | Übertragungskanal |
| 4 | Bewegungsachse | 34 | Übertragungskanal |
| 5 | Steuereinheit | 35 | Schnittstelle |
| 6 | Speichermodul | 36 | Maschine |
| 7 | Messobjekt | 37 | Umhausung |
| 8 | Messsystem | 38 | Maschinentisch |
| 9 | Messinstrument | 39 | Bewegungsachse |
| 10 | Übertragungskanal | 40 | Steuereinheit |
| 11 | Kontrolleinheit | 41 | Speichermodul |
| 12 | Steuerungsmodul | 42 | Messobjekt |
| 13 | Speichereinheit | 43 | Messsystem |
| 14 | Zeitgeber | 44 | Messinstrument |
| 15 | Übertragungskanal | 45 | Schnittstelle |
| 16 | Maschine | 46 | Schnittstelle |
| 17 | Umhausung | 47 | Schnittstelle |
| 18 | Maschinentisch | 48 | Schnittstelle |
| 19 | Bewegungsachse | 49 | Schnittstelle |
| 20 | Steuereinheit | 50 | Schnittstelle |
| 21 | Speichermodul | 51 | Sende- und Empfangseinheit |
| 22 | Messobjekt | | |
| 23 | Messsystem | 52 | Kontrolleinheit |
| 24 | Messinstrument | 53 | Zeitgeber |
| 25 | Übertragungskanal | 54 | Steuerungsmodul |
| 26 | Übertragungskanal | 55 | Speichereinheit |
| 27 | Übertragungskanal | 56 | Zeitgeber |
| 28 | Sende- und Empfangseinheit | 57 | Übertragungskanal |
| | | 58 | Übertragungskanal |
| 29 | Kontrolleinheit | 59 | Übertragungskanal |
| 30 | Steuerungsmodul | 60 | Übertragungskanal |

## Patentansprüche

1. Messsystem (8, 23, 43) zur scannenden Erfassung von Messwerten, wobei das Messsystem (8, 23, 43) ein Messinstrument (9, 24, 44) umfasst, wobei das Messsystem (8, 23, 43) an eine Bewegungsachse (4, 19, 39) einer Maschine (1, 16, 36) anordenbar ausgebildet ist, wobei die Maschine (1, 16, 36) als Werkzeugmaschine oder als Messmaschine ausgebildet ist, wobei mit dem Messinstrument (9, 24, 44) ein Messobjekt (7, 22, 42) vermessen werden kann, wobei das Messinstrument (9, 24, 44) beim Vermessen des Messobjekts (7, 22, 42) einen Messwert erzeugt, wobei das Messsystem (8, 23, 43) eine Kontrolleinheit (11, 29, 52) umfasst, wobei die Kontrolleinheit (11, 29, 52) den Messwert verarbeiten und speichern kann, wobei das Messsystem (8, 23, 43) eine Speichereinheit (13, 31, 40) aufweist, um den erfassten Messwert zu speichern,
**dadurch gekennzeichnet, dass**
das Messsystem (8, 23, 43) dazu ausgebildet ist, einen ersten Messwert mit einer ersten Positionskoordinate des an der Maschine (1, 16, 36) angeordneten Messinstruments (9, 24, 44) in Korrelation zu bringen, wobei das Messsystem (8, 23, 43) dazu ausgebildet ist, ausgehend von der Korrelation des ersten Messwerts mit der ersten Positionskoordinate allen weiteren vom Messinstrument (9, 24, 44) erfassten Messwerten Positionskoordinaten einzig dadurch zuzuweisen, dass dem Messsystem (8, 23, 43) eine Bewegungsgeschwindigkeit und eine Bewegungsrichtung des Messinstruments (9, 24, 44) während oder bei der Erfassung der Messwerte bekannt ist, wobei der erste Messwert der zeitlich gesehen letzte erzeugte Messwert der Messung ist, wobei das Messinstrument (9, 24, 44) eine Schnittstelle umfasst, mittels welcher das Messinstrument mit einer Steuereinheit der Maschine verbindbar ist.

2. Messsystem (8, 23, 43) nach dem vorangegangenen Anspruch 1, **dadurch gekennzeichnet, dass**, ausgehend von der Korrelation des ersten Messwerts mit der ersten Positionskoordinate, das Messsystem (8, 23, 43) dazu ausgebildet ist, weiteren vom Messinstrument (9, 24, 44) erfassten Messwerten weitere Positionskoordinaten dadurch zuzuweisen, dass dem Messsystem (8, 23, 43) ein räumlicher Bezug der erfassten Messwerte zueinander bekannt ist.

3. Messsystem (8, 23, 43) nach einem der vorangegangenen Ansprüche, **dadurch gekennzeichnet, dass**, ausgehend von der Korrelation des ersten Messwerts mit der ersten Positionskoordinate, das Messsystem (8, 23, 43) dazu ausgebildet ist, weiteren vom Messinstrument (9, 24, 44) erfassten Messwerten weitere Positionskoordinaten dadurch zuzuweisen, dass dem Messsystem (8, 23, 43) ein zeitlicher Bezug der erfassten Messwerte zueinander bekannt ist.

4. Messsystem (8, 23, 43) nach einem der vorangegangenen Ansprüche, **dadurch gekennzeichnet, dass** das Messinstrument (9, 24, 44) als ein berührungslos arbeitendes Messinstrument (9, 24, 44) ausgebildet ist.

5. Messsystem (8, 23, 43) nach einem der vorangegangenen Ansprüche, **dadurch gekennzeichnet, dass** das Messsystem (8, 23, 43) eine Schnittstelle (10, 27, 50) zum Verbinden des Messsystems (8, 23, 43) mit einer Steuereinheit (5, 20, 40) der Maschine (1, 16, 36) aufweist, wobei die Kontrolleinheit (11, 29, 52) ein Steuerungsmodul (12, 30, 54) aufweist, welches über die Schnittstelle (10, 27, 50) Positionskoordinaten von der Maschine (1, 16, 36) ausliest, wobei das Steuerungsmodul (12, 30, 54) die ausgelesene Positionskoordinate mit einem vorgegebenen Koordinaten-Zielbereich abgleicht und wobei das Steuerungsmodul (12, 30, 54) ein Triggersignal auslöst, wenn das Steuerungsmodul (12, 30, 54) feststellt, dass die Positionskoordinate im Koordinaten-Zielbereich liegt.

6. Messsystem (8, 23, 43) nach einem der vorangegangenen Ansprüche, **dadurch gekennzeichnet, dass** das Messsystem (8, 23, 43) einen Zeitgeber (14, 32, 53) umfasst, wobei die Kontrolleinheit (11, 29, 52) ein Steuerungsmodul (12, 30, 54) aufweist, wobei das Steuerungsmodul (12, 30, 54) eine Zeit des Zeitgebers (14, 32, 53) mit einem vorgegebenen Zeitpunkt abgleicht und wobei das Messsystem (8, 23, 43) das Triggersignal auslöst, wenn die Zeit des Zeitgebers (14, 32, 53) den vorgegebenen Zeitpunkt erreicht oder überschritten hat.

7. Messsystem (8, 23, 43) nach einem der vorangegangenen Ansprüche 5 oder 6, **dadurch gekennzeichnet, dass** die Kontrolleinheit (11, 29, 52) das Triggersignal zusammen mit dem zum Zeitpunkt des Triggersignals erfassten Messwert in der Speichereinheit (13, 31, 40) ablegt, wobei dem Messsystem (8, 23, 43) ein zeitlicher Bezug von Triggersignal und Messwert bekannt ist.

8. Messsystem (8, 23, 43) nach einem der vorangegangenen Ansprüche 5 bis 7, **dadurch gekennzeichnet, dass** der zum Zeitpunkt des Triggersignals erfasste Messwert der erste Messwert ist.

9. Messsystem (8, 23, 43) nach einem der vorangegangenen Ansprüche 5 bis 8, **dadurch gekennzeichnet, dass** die Kontrolleinheit (11, 29, 52) dazu ausgebildet ist, das Triggersignal über eine Schnittstelle (10, 27, 35, 47) an die Steuereinheit (5, 20, 40) der Maschine (1, 16, 36) zu übermitteln.

10. Maschine (1, 16, 36), insbesondere Werkzeugmaschine und/oder Messmaschine, mit einem Messsystem (8, 23, 43) nach einem der vorangegangen genannten Ansprüchen 1 bis 9, **dadurch gekennzeichnet, dass** die Maschine (1, 16, 36) dazu ausgebildet ist, aufgrund eines Triggersignals des Messsystems (8, 23, 43) eine Achsbewegung der Bewegungsachse (4, 19, 39) zu stoppen.

11. Maschine (1, 16, 36), insbesondere Werkzeugmaschine und/oder Messmaschine, nach dem vorangegangenen Anspruch 10, **dadurch gekennzeichnet, dass** die Steuereinheit (5, 20, 40) der Maschine (1, 16, 36) eine Achsposition zum Zeitpunkt des Empfangs eines Triggersignals des Messsystems (8, 23, 43) in einem Speichermodul (6, 21, 41) der Maschine (1, 16, 36) auslesbar abspeichert.

## Claims

1. Measuring system (8, 23, 43) for scanning acquisition of measurement values, the measuring system (8, 23, 43) comprising a measuring instrument (9, 24, 44), the measuring system (8, 23, 43) being in a form that is arrangeable on a movement bar (4, 19, 39) of a machine (1, 16, 36), the machine (1, 16, 36) being in the form of a machine tool or a measuring machine, a measurement object (7, 22, 42) being able to be measured by the measuring instrument (9, 24, 44), the measuring instrument (9, 24, 44) generating a measurement value when measuring the measurement object (7, 22, 42), the measuring system (8, 23, 43) comprising a controller unit (11, 29, 52), the controller unit (11, 29, 52) being able to process and store the measurement value, the measuring system (8, 23, 43) having a storage unit (13, 31, 40) for storing the acquired measurement value,
**characterized in that**
the measuring system (8, 23, 43) is designed to correlate a first measurement value with a first position coordinate of the measuring instrument (9, 24, 44) arranged on the machine (1, 16, 36), the measuring system (8, 23, 43), using the correlation of the first measurement value with the first position coordinate as a starting point, being designed to assign position coordinates to all further measurement values acquired by the measuring instrument (9, 24, 44) simply by virtue of a movement speed and a movement direction of the measuring instrument (9, 24, 44) during or at the instance of acquisition of the measurement values being known to the measuring system (8, 23, 43), with the first measurement value being the chronologically last generated measurement value of the measurement and with the measuring instrument (9, 24, 44) comprising an interface, by means of which the measuring instrument can be connected to a control unit of the machine.

2. Measuring system (8, 23, 43) according to preceding Claim 1, **characterized in that**, using the correlation of the first measurement value with the first position coordinate as a starting point, the measuring system (8, 23, 43) is designed to assign further position coordinates to further measurement values acquired by the measuring instrument (9, 24, 44) by virtue of a spatial relationship between the acquired measurement values being known to the measuring system (8, 23, 43).

3. Measuring system (8, 23, 43) according to either of the preceding claims, **characterized in that**, using the correlation of the first measurement value with the first position coordinate as a starting point, the measuring system (8, 23, 43) is designed to assign further position coordinates to further measurement values acquired by the measuring instrument (9, 24, 44) by virtue of a temporal relationship between the acquired measurement values being known to the measuring system (8, 23, 43).

4. Measuring system (8, 23, 43) according to any of the preceding claims, **characterized in that** the measuring instrument (9, 24, 44) is in the form of a contactlessly operating measuring instrument (9, 24, 44).

5. Measuring system (8, 23, 43) according to any of the preceding claims, **characterized in that** the measuring system (8, 23, 43) has an interface (10, 27, 50) for connecting the measuring system (8, 23, 43) to a control unit (5, 20, 40) of the machine (1, 16, 36), the controller unit (11, 29, 52) having a control module (12, 30, 54) which reads position coordinates from the machine (1, 16, 36) via the interface (10, 27, 50), the control module (12, 30, 54) comparing the read position coordinate with a specified coordinate target range and the control module (12, 30, 54) triggering a trigger signal should the control module (12, 30, 54) determine that the position coordinate is located in the coordinate target range.

6. Measuring system (8, 23, 43) according to any of the preceding claims, **characterized in that** the measuring system (8, 23, 43) comprises a timer (14, 32, 53), the controller unit (11, 29, 52) having a control module (12, 30, 54), the control module (12, 30, 54) comparing a time from the timer (14, 32, 53) with a specified time and the measuring system (8, 23, 43) triggering the trigger signal should the time from the timer (14, 32, 53) reach or pass the specified time.

7. Measuring system (8, 23, 43) according to either of preceding Claims 5 and 6, **characterized in that** the controller unit (11, 29, 52) stores the trigger signal in the storage unit (13, 31, 40) together with the measurement value acquired at the time of the trigger signal, a temporal relationship between trigger signal and measurement value being known to the measuring system (8, 23, 43).

8. Measuring system (8, 23, 43) according to any of preceding Claims 5 to 7, **characterized in that** the measurement value acquired at the time of the trigger signal is the first measurement value.

9. Measuring system (8, 23, 43) according to any of preceding Claims 5 to 8, **characterized in that** the controller unit (11, 29, 52) is designed to transmit the trigger signal to the control unit (5, 20, 40) of the machine (1, 16, 36) via an interface (10, 27, 35, 47).

10. Machine (1, 16, 36), more particularly a machine tool and/or a measuring machine, comprising a measuring system (8, 23, 43) according to any of aforementioned Claims 1 to 9, **characterized in that** the machine (1, 16, 36) is designed to stop an axial movement of the movement bar (4, 19, 39) on account of a trigger signal from the measuring system (8, 23, 43).

11. Machine (1, 16, 36), more particularly a machine tool and/or a measuring machine, according to preceding Claim 10, **characterized in that** the control unit (5, 20, 40) of the machine (1, 16, 36) stores, in a storage module (6, 21, 41) of the machine (1, 16, 36) in readable fashion, an axial position at the time of reception of a trigger signal of the measuring system (8, 23, 43).

## Revendications

1. Système de mesure (8, 23, 43) destiné à l'acquisition de valeurs mesurées par balayage, le système de mesure (8, 23, 43) comprenant un instrument de mesure (9, 24, 44), le système de mesure (8, 23, 43) étant configuré de manière à pouvoir être disposé au niveau d'un axe de mouvement (4, 19, 39) d'une machine (1, 16, 36), la machine (1, 16, 36) étant réalisée sous la forme d'une machine-outil ou d'une machine de mesure, un objet de mesure (7, 22, 42) pouvant être mesuré avec l'instrument de mesure (9, 24, 44), l'instrument de mesure (9, 24, 44) générant une valeur mesurée lors de la mesure de l'objet de mesure (7, 22, 42), le système de mesure (8, 23, 43) comprenant une unité de contrôle (11, 29, 52), l'unité de contrôle (11, 29, 52) pouvant traiter et mémoriser la valeur mesurée, le système de mesure (8, 23, 43) possédant une unité de mémoire (13, 31, 40) destinée à mémoriser la valeur mesurée acquise, **caractérisé en ce que**
le système de mesure (8, 23, 43) est configuré pour mettre en corrélation une première valeur mesurée avec une première coordonnée de position de l'instrument de mesure (9, 24, 44) disposé sur la machine (1, 16, 36), le système de mesure (8, 23, 43) étant configuré pour, à partir de la corrélation de la première valeur mesurée avec la première coordonnée de position, attribuer individuellement des coordonnées de position à toutes les valeurs mesurées supplémentaires acquises par l'instrument de mesure (9, 24, 44) de telle sorte que le système de mesure (8, 23, 43) connaît une vitesse de déplacement et une direction de déplacement de l'instrument de mesure (9, 24, 44) pendant ou lors de l'acquisition des valeurs mesurées, la première valeur mesurée étant chronologiquement la dernière valeur mesurée générée de la mesure, l'instrument de mesure (9, 24, 44) comprenant une interface au moyen de laquelle l'instrument de mesure peut être connecté à une unité de commande de la machine.

2. Système de mesure (8, 23, 43) selon la revendication 1 précédente, **caractérisé en ce que**, à partir de la corrélation de la première valeur mesurée avec la première coordonnée de position, le système de mesure (8, 23, 43) est configuré pour attribuer des coordonnées de position supplémentaires à des valeurs mesurées supplémentaires acquises par l'instrument de mesure (9, 24, 44) de telle sorte que le système de mesure (8, 23, 43) connaît une référence spatiale des valeurs mesurées acquises entre elles.

3. Système de mesure (8, 23, 43) selon l'une des revendications précédentes, **caractérisé en ce que**, à partir de la corrélation de la première valeur mesurée avec la première coordonnée de position, le système de mesure (8, 23, 43) est configuré pour attribuer des coordonnées de position supplémentaires à des valeurs mesurées supplémentaires acquises par l'instrument de mesure (9, 24, 44) ce telle sorte que le système de mesure (8, 23, 43) connaît une relation temporelle des valeurs mesurées acquises entre elles.

4. Système de mesure (8, 23, 43) selon l'une des revendications précédentes, **caractérisé en ce que** l'instrument de mesure (9, 24, 44) est réalisé sous la forme d'un instrument de mesure (9, 24, 44) fonctionnant sans contact.

5. Système de mesure (8, 23, 43) selon l'une des revendications précédentes, **caractérisé en ce que** le système de mesure (8, 23, 43) possède une interface (10, 27, 50) destinée à connecter le système de mesure (8, 23, 43) à une unité de commande (5, 20, 40) de la machine (1, 16, 36), l'unité de contrôle (11, 29, 52) possédant un module de commande (12, 30, 54), lequel lit les coordonnées de position de la machine (1, 16, 36) par le biais de l'interface (10, 27, 50), le module de commande (12, 30, 54) comparant les coordonnées de position lues à une zone cible de coordonnées prédéfinie, et le module de commande (12, 30, 54) déclenchant un signal de déclenchement lorsque le module de commande (12, 30, 54) constate que les coordonnées de position se trouvent dans la zone cible de coordonnées.

6. Système de mesure (8, 23, 43) selon l'une des revendications précédentes, **caractérisé en ce que** le système de mesure (8, 23, 43) comprend un générateur de rythme (14, 32, 53), l'unité de contrôle (11, 29, 52) possédant un module de commande (12, 30, 54), le module de commande (12, 30, 54) comparant un temps du générateur de rythme (14, 32, 53) à un instant prédéfini et le système de mesure (8, 23, 43) déclenchant le signal de déclenchement lorsque le temps du générateur de rythme (14, 32, 53) a atteint ou dépassé l'instant spécifié.

7. Système de mesure (8, 23, 43) selon l'une des revendications 5 ou 6 précédentes, **caractérisé en ce que** l'unité de contrôle (11, 29, 52) enregistre dans l'unité de mémoire (13, 31, 40) le signal de déclenchement conjointement avec la valeur mesurée acquise au moment du signal de déclenchement, le système de mesure (8, 23, 43) connaissant une référence temporelle entre le signal de déclenchement et la valeur mesurée.

8. Système de mesure (8, 23, 43) selon l'une des revendications précédentes 5 à 7, **caractérisé en ce que** la valeur mesurée acquise au moment du signal de déclenchement est la première valeur mesurée.

9. Système de mesure (8, 23, 43) selon l'une des revendications précédentes 5 à 8, **caractérisé en ce que** l'unité de contrôle (11, 29, 52) est configurée pour communiquer le signal de déclenchement à l'unité de commande (5, 20, 40) de la machine (1, 16, 36) par le biais d'une interface (10, 27, 35, 47).

10. Machine (1, 16, 36), en particulier machine-outil et/ou machine de mesure, comprenant un système de mesure (8, 23, 43) selon l'une des revendications 1 à 9 mentionnées précédemment, **caractérisée en ce que** la machine (1, 16, 36) est configurée pour arrêter un déplacement d'axe de l'axe de déplacement (4, 19, 39) en raison d'un signal de déclenchement du système de mesure (8, 23, 43).

11. Machine (1, 16, 36), en particulier machine-outil et/ou machine de mesure, selon la revendication 10 précédente, **caractérisée en ce que** l'unité de commande (5, 20, 40) de la machine (1, 16, 36) mémorise de manière lisible, dans un module de mémoire (6, 21, 41) de la machine (1, 16, 36), une position d'axe au moment de la réception d'un signal de déclenchement du système de mesure (8, 23, 43).
